# FASCICULE DE BREVET EUROPEEN

(11) **EP 2 922 799 B1**
(45) Date de publication et mention de la délivrance du brevet: **04.05.2022**
(21) Numéro de dépôt: 13808097.3
(22) Date de dépôt: 22.11.2013
(51) Int. Cl.: C03C 17/36, E06B 3/36

(54) **SUBSTRAT MUNI D'UN EMPILEMENT A COUCHE METALLIQUE PARTIELLE, VITRAGE ET PROCEDE**
SUBSTRAT MIT EINER MEHRFACHSCHICHT MIT EINER PARTIELLEN METALLSCHICHT, VERGLASUNGSEINHEIT UND -VERFAHREN
SUBSTRATE EQUIPPED WITH A MULTILAYER COMPRISING A PARTIAL METAL FILM, GLAZING UNIT AND PROCESS

(30) Priorité: 23.11.2012 FR 1261191
(43) Date de publication de la demande: 30.09.2015
(73) Titulaire: SAINT-GOBAIN GLASS FRANCE, 92400 Courbevoie (FR); Centre National de la Recherche Scientifique (C.N.R.S.), 75016 Paris (FR)
(72) Inventeur: ALZATE, Lina, F - 69006 LYON (FR); DALMAS, Davy, F-78400 Chatou (FR); BARTHEL, Etienne, F-92340 Bourg La Reine (FR); NICOLAS, David, F-75014 Paris (FR); GEORGES, Benoit, DUBAI (AE)
(74) Mandataire: Saint-Gobain Recherche
(86) Numéro de dépôt international: PCT/FR2013/052830
(87) Numéro de publication internationale: WO 2014/080141

(56) Documents cités:
- WO-A1-00/29346
- WO-A2-2007/064450
- WO-A2-2007/064450
- FR-A1- 2 942 794
- FR-A1- 2 942 794
- US-A1- 2003 049 464
- US-A1- 2011 236 715
- OATES T W H ET AL: "Evolution of plasmon resonances during plasma deposition of silver nanoparticles; Evolution of plasmon resonances during plasma deposition of silver nanoparticles", NANOTECHNOLOGY, IOP, BRISTOL, GB, vol. 16, no. 11, 1 November 2005 (2005-11-01), pages 2606-2611, XP020090831, ISSN: 0957-4484, DOI: 10.1088/0957-4484/16/11/023

## Description

L'invention concerne un substrat transparent notamment en un matériau rigide minéral comme le verre, ledit substrat étant revêtu d'un empilement de couches minces comprenant une ou plusieurs couches fonctionnelles pouvant agir sur le rayonnement solaire et/ou le rayonnement infrarouge de grande longueur d'onde.

L'invention concerne plus particulièrement un substrat, notamment un substrat verrier transparent, muni d'un empilement de couches minces comportant une alternance de « n » couches fonctionnelles métalliques, notamment de couches fonctionnelles à base d'argent ou d'alliage métallique contenant de l'argent, et de « (n + 1) » revêtements antireflet, avec n nombre entier ≥ 1, de manière à ce que la ou chaque couche fonctionnelle soit disposée entre deux revêtements antireflet. Chaque revêtement antireflet comporte au moins une couche antireflet et chaque revêtement étant, de préférence, composé d'une pluralité de couches, dont une couche au moins, voire chaque couche, est une couche antireflet. La notion de couche antireflet est ici synonyme de celle de couche diélectrique ; la notion de couche diélectrique étant utilisée surtout par opposition à la notion de couche fonctionnelle métallique, qui par sa nature métallique ne peut pas être diélectrique.

L'invention concerne plus particulièrement l'utilisation de tels substrats pour fabriquer des vitrages d'isolation thermique et/ou de protection solaire. Ces vitrages peuvent être destinés aussi bien à équiper les bâtiments que les véhicules, en vue notamment de diminuer l'effort de climatisation et/ou d'empêcher une surchauffe excessive (vitrages dits « de contrôle solaire ») et/ou diminuer la quantité d'énergie dissipée vers l'extérieur (vitrages dits « bas émissifs ») entraînée par l'importance toujours croissante des surfaces vitrées dans les bâtiments et les habitacles de véhicules.

Ces substrats peuvent en particulier être intégrés dans des dispositifs électroniques et l'empilement peut alors servir d'électrode pour la conduction d'un courant (dispositif éclairant, dispositif d'affichage, panneau voltaïque, vitrage électrochrome, ...) ou peuvent être intégrés dans des vitrages présentant des fonctionnalités particulières, comme par exemple des vitrages chauffants.

Un type d'empilement de couches connu pour conférer aux substrats de telles propriétés est constitué d'une couche métallique fonctionnelle à propriétés de réflexion dans l'infrarouge et/ou dans le rayonnement solaire, notamment une couche fonctionnelle métallique à base d'argent ou d'alliage métallique contenant de l'argent ou complètement en argent.

Dans ce type d'empilement, la couche fonctionnelle se trouve ainsi disposée entre deux revêtements diélectrique antireflet comportant chacun en général plusieurs couches qui sont chacune en un matériau antireflet du type nitrure et notamment nitrure de silicium ou d'aluminium ou oxyde.

Un revêtement de blocage est toutefois intercalé parfois entre un ou chaque revêtement antireflet et la couche métallique fonctionnelle, le revêtement de blocage disposé sous la couche fonctionnelle en direction du substrat la protège lors d'un éventuel traitement thermique à haute température, du type bombage et/ou trempe et le revêtement de blocage disposé sur la couche fonctionnelle à l'opposé du substrat protège cette couche d'une éventuelle dégradation lors du dépôt du revêtement antireflet supérieur et lors d'un éventuel traitement thermique à haute température, du type bombage et/ou trempe.

Actuellement, il est généralement souhaité que chaque couche fonctionnelle métallique soit une couche complète, c'est-à-dire soit constituée sur la totalité de sa surface et sur la totalité de son épaisseur du matériau métallique considéré.

L'homme du métier considère que pour un matériau donné (par exemple l'argent), dans les conditions habituelles de dépôt de ce matériau, une couche complète n'est obtenue qu'à partir d'une certaine épaisseur seulement.

L'énergie d'adhésion entre une couche d'argent complète et les couches antireflet est très faible, de l'ordre de 1 J/m² environ, et l'énergie d'adhésion entre deux antireflet est cinq à neuf fois plus élevée que celle entre l'argent et une autre couche. L'énergie d'adhésion d'un empilement comportant au moins une couche fonctionnelle en argent ou à base d'argent est donc limitée par cette faible énergie d'adhésion d'une couche fonctionnelle métallique complète avec les autres matériaux.

L'art antérieur connait du document US 2011/0236715 des exemples à trois couches fonctionnelles en argent dont la couche centrale est une couche discontinue.

Les inventeurs se sont intéressés à la possibilité de déposer des empilements de couches minces avec une ou plusieurs couches fonctionnelles métalliques et avec pour la couche fonctionnelle métallique unique ou toutes ces couches fonctionnelles métalliques lorsqu'il y en a plusieurs, une épaisseur inférieure à l'épaisseur minimum requise pour obtenir une couche complète dans les conditions considérées. Les inventeurs ont ainsi constaté que, bien évidemment, la résistance par carré de l'empilement était plus élevée qu'avec les mêmes empilements à couche(s) fonctionnelle(s) complète(s), mais que cette résistance par carré pouvait tout de même permettre certaines applications. Surtout, les inventeurs ont constaté que l'énergie d'adhésion de l'empilement était alors plus élevée que ce que les modèles théoriques prévoyaient.

Les inventeurs ont alors constatés que des résistances mécaniques très élevées, et même, encore plus surprenant, des résistances chimiques très élevées, pouvaient être obtenues pour des empilements comportant une seule couche fonctionnelle métallique et cette couche fonctionnelle métallique étant discontinue ainsi que pour des empilements comportant plusieurs couches fonctionnelles métalliques et toutes ces couches fonctionnelles métalliques étant discontinues.

En outre, les inventeurs ont constaté que les empilements ainsi réalisés étaient transparents, sans voile (« haze ») ou sans irisation, et avec des couleurs, tant en transmission qu'en réflexion, qui pouvaient être similaires à celles obtenues avec les empilements à couche(s) fonctionnelle(s) métalliques(s) complète(s).

Enfin, les inventeurs ont constatés que ces excellentes propriétés de résistances mécanique et chimique étaient conservées même si le substrat revêtu de l'empilement subissait un traitement thermique de bombage, trempe ou recuit.

Cette constatation ouvre ainsi la voie à l'utilisation de ce type d'empilement pour des applications pour lesquelles il est acceptable qu'une couche fonctionnelle métallique, ou chaque couche fonctionnelle métallique, présente une résistance par carré relativement haute (par exemple supérieure à 10 Ω/carré) et pour lesquelles la haute énergie d'adhésion, qui a un effet favorable sur la résistance mécanique, voire parfois sur la résistance chimique, est un avantage important.

Dans le cadre de l'exemple ci-dessus, il est alors possible de réaliser un empilement de couches minces qui présente, certes, une résistance par carré plus élevée que si la, certaines, ou toutes les couches fonctionnelles de l'empilement étaient complètes, mais qui est particulièrement résistant et peut alors être utilisé dans des régions où les conditions climatiques engendrent de fortes contraintes.

L'invention a ainsi pour objet, dans son acception la plus large, un substrat selon la revendication 1. Ce substrat est revêtu sur une face d'un empilement de couches minces comportant au moins une couche fonctionnelle métallique à base d'argent ou en argent et deux revêtements antireflet, lesdits revêtements antireflet comportant chacun au moins une couche antireflet, une dite couche fonctionnelle étant disposée entre les deux revêtements antireflet ; ladite (c'est-à-dire la seule couche fonctionnelle métallique de l'empilement lorsque l'empilement comporte une seule couche fonctionnelle métallique à base d'argent ou en argent), ou chaque (c'est-à-dire toutes les couches fonctionnelles métalliques de l'empilement lorsque l'empilement comporte plusieurs couches fonctionnelles métalliques à base d'argent ou en argent) couche fonctionnelle métallique est une couche discontinue présentant un taux d'occupation surfacique compris entre 50 % et 98 %, voire entre 53 % et 83 %, voire entre 63 % et 83 %.

Selon l'invention, la couche fonctionnelle ainsi déposée, ou chaque couche fonctionnelle ainsi déposée est une couche auto-structurée présentant une structuration sous la forme d'ilots connectés entre eux, avec des zones non couvertes entre les ilots.

Comme la couche fonctionnelle métallique lorsqu'elle est l'unique couche fonctionnelle métallique de l'empilement ou chaque couche fonctionnelle métallique lorsqu'il y a plusieurs couches fonctionnelles métalliques métalliques dans l'empilement n'est pas continue, cela permet d'avoir un contact direct entre les couches qui entourent la ou chaque couche fonctionnelle métallique à base d'argent ou en argent. Ces zones ont une adhésion forte. Une fissure éventuelle développée à l'interface la plus faible, donc celle entre l'argent et la couche adjacente, devra aussi se propager entre les deux couches antireflet pour avancer, ce qui demande une énergie plus élevée. C'est donc de cette façon que l'énergie d'adhésion globale de l'empilement se voit considérablement améliorée.

Il est important que l'empilement de couches minces ne comporte aucune couche fonctionnelle métallique à base d'argent ou en argent qui soit continue car la présence d'au moins une telle couche continue diminue l'énergie d'adhésion aux deux interfaces de cette couche fonctionnelle métallique continue ou de chaque couche fonctionnelle métallique continue et diminue en conséquence les propriétés de résistance de l'ensemble de l'empilement par un phénomène de « maillon faible ».

Par « couche discontinue » au sens de la présente invention, il faut comprendre que lorsqu'est considéré un carré de dimensions quelconques à la surface de l'empilement selon l'invention, alors, dans ce carré, la couche fonctionnelle discontinue n'est présente que sur 50 % à 98 % de la surface du carré, voire sur 53 % à 83 % de la surface du carré, voire respectivement sur 63 % à 83 %.

Le carré considéré est situé dans une partie principale du revêtement ; il ne s'agit pas dans le cadre de l'invention de réaliser un bord particulier ou un contour particulier qui serait ensuite caché pour l'utilisation finale.

La discontinuité est telle qu'il est possible de mesurer une résistance par carré non infinie par la technique habituelle. Il s'agit ainsi d'obtenir une couche fonctionnelle discontinue (ou chaque couche fonctionnelle discontinue) pour laquelle (ou lesquelles) les amas de matière métallique qui constitue la couche sont séparés par des volumes d'absence complète de cette matière mais sont connectés entre eux.

Selon l'invention, ce type d'empilement à couche(s) fonctionnelle(s) auto-structuré présente une énergie d'adhésion supérieure par rapport aux empilements à couche(s) fonctionnelle(s) continue(s) et leurs propriétés optiques (transmission lumineuse, réflexion lumineuse et émissivité) sont diminuées tout en restant dans des gammes acceptables pour certaines applications spécifiques, principalement pour les régions à climats chauds ou tempérés) pour lesquels, un niveau d'émissivité de l'ordre de 20% à 30 % peu convenir.

Par « revêtement » au sens de la présente invention, il faut comprendre qu'il peut y avoir une seule couche ou plusieurs couches de matériaux différents à l'intérieur du revêtement.

Par « empilement », il faut comprendre un ensemble de couches minces déposées les unes sur les autres, sans interposition entre ces couches d'un substrat minéral (comme du verre) ou organique (comme une feuille de matière plastique).

Comme habituellement, par « couche à base d'un matériau » il faut comprendre que la couche est constituée majoritairement de ce matériau, c'est-à-dire que l'élément chimique du matériau, ou le cas échéant le produit du matériau considéré dans sa formule stoechiométrique stable, constitue au moins 50 %, en pourcentage atomique de la couche considérée.

Comme habituellement aussi, par « couche antireflet» au sens de la présente invention, il faut comprendre que du point de vue de sa nature, le matériau est « non métallique », c'est-à-dire n'est pas un métal. Dans le contexte de l'invention, ce terme désigne un matériau présentant un rapport n/k sur toute la plage de longueur d'onde du visible (de 380 nm à 780 nm) égal ou supérieur à 5.

Il est rappelé que n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée.

Les valeurs d'indice de réfraction indiquées dans le présent document sont les valeurs mesurées comme habituellement à la longueur d'onde de 550 nm.

Selon l'invention, ladite, ou chaque couche fonctionnelle métallique discontinue présente une épaisseur e :
- 1,0 ≤ e ≤ 4,5 nm, voire 1,0 ≤ e ≤ 4,0 nm ; ou 2,0 ≤ e ≤ 4,5 nm, voire 2,0 ≤ e ≤ 4,0 nm, déposée sur une couche à base de dioxyde de titane TiO₂, ou
- 1,0 ≤ e ≤ 4,5 nm, voire 1,0 ≤ e ≤ 4,0 nm ; ou 2,0 ≤ e ≤ 4,5 nm, voire 2,0 ≤ e ≤ 4,0 nm, déposée sur une couche à base d'oxyde de zinc et d'étain SnZnOₓ, ou
- 1,0 ≤ e ≤ 5,0 nm, voire 1,0 ≤ e ≤ 4,5 nm ; ou 2,0 ≤ e ≤ 5,0 nm, voire 2,0 ≤ e ≤ 4,5 nm, déposée sur une couche à base d'oxyde de zinc ZnO, ou
- 1,0 ≤ e ≤ 7,0 nm, voire 1,0 ≤ e ≤ 6,0 nm ; ou 2,0 ≤ e ≤ 7,0 nm, voire 2,0 ≤ e ≤ 6,0 nm, déposée sur une couche à base de nitrure de silicium Si₃N₄, ou
- 1,0 ≤ e ≤ 5,0 nm, voire 1,0 ≤ e ≤ 4,0 nm ; ou 2,0 ≤ e ≤ 5,0 nm, voire 2,0 ≤ e ≤ 4,0 nm, déposée sur une couche à base de nickel.

De préférence, l'empilement selon l'invention est déposé directement sur la face du substrat.

Pour un empilement selon l'invention comportant une seule couche fonctionnelle métallique discontinue :
- Dans une version particulière de l'invention, ledit revêtement antireflet disposé entre la face et ladite couche fonctionnelle métallique comporte une couche antireflet d'indice moyen en un matériau présentant un indice de réfraction compris entre 1,8 et 2,2, cette couche étant de préférence à base d'oxyde. Cette couche antireflet d'indice moyen peut présenter une épaisseur physique comprise entre 5 et 35 nm.
- Il est possible par ailleurs que ledit revêtement antireflet disposé sous ladite couche fonctionnelle métallique comporte une couche antireflet d'indice haut en un matériau présentant un indice de réfraction compris entre 2,3 et 2,7, cette couche antireflet d'indice haut étant de préférence à base d'oxyde et/ou cette couche antireflet d'indice haut présentant de préférence une épaisseur physique comprise entre 5 et 25 nm.
- Dans une autre version particulière de l'invention, ledit revêtement antireflet disposé au-dessus de ladite couche fonctionnelle métallique à l'opposé de la face comporte une couche antireflet d'indice moyen en un matériau présentant un indice de réfraction compris entre 1,8 et 2,2, cette couche étant de préférence à base d'oxyde. Cette couche antireflet d'indice moyen présente, de préférence, une épaisseur physique comprise entre 5 et 35 nm.

Il est possible par ailleurs que ledit revêtement antireflet disposé au-dessus de ladite couche fonctionnelle métallique comporte une couche antireflet d'indice haut en un matériau présentant un indice de réfraction compris entre 2,3 et 2,7, cette couche antireflet d'indice haut étant de préférence à base d'oxyde et/ou cette couche antireflet d'indice haut présentant de préférence une épaisseur physique comprise entre 5 et 25 nm. Ledit empilement peut comporter uniquement deux couches fonctionnelles métalliques discontinue à base d'argent ou en argent et trois revêtements antireflet, chaque couche fonctionnelle métallique étant disposée entre deux revêtements antireflet.

Ledit empilement peut comporter uniquement trois couches fonctionnelles métalliques discontinue à base d'argent ou en argent et quatre revêtements antireflet, chaque couche fonctionnelle métallique discontinue étant disposée entre deux revêtements antireflet.

Pour un empilement selon l'invention comportant plusieurs couches fonctionnelles métalliques discontinues :
- Dans une version particulière de l'invention, ledit revêtement antireflet disposé entre la face et la première, ou sous chaque, couche fonctionnelle métallique comporte une couche antireflet d'indice moyen en un matériau présentant un indice de réfraction compris entre 1,8 et 2,2, cette couche étant de préférence à base d'oxyde. Cette couche antireflet d'indice moyen peut présenter une épaisseur physique comprise entre 5 et 35 nm.
- Il est possible par ailleurs que ledit revêtement antireflet disposé sous la première, ou sous chaque, couche fonctionnelle métallique comporte une couche antireflet d'indice haut en un matériau présentant un indice de réfraction compris entre 2,3 et 2,7, cette couche antireflet d'indice haut étant de préférence à base d'oxyde et/ou cette couche antireflet d'indice haut présentant de préférence une épaisseur physique comprise entre 5 et 25 nm.
- Dans une autre version particulière de l'invention, ledit revêtement antireflet disposé au-dessus de la dernière, ou au-dessus de chaque, couche fonctionnelle métallique à l'opposé de la face comporte une couche antireflet d'indice moyen en un matériau présentant un indice de réfraction compris entre 1,8 et 2,2, cette couche étant de préférence à base d'oxyde. Cette couche antireflet d'indice moyen présente, de préférence, une épaisseur physique comprise entre 5 et 35 nm.
- Il est possible par ailleurs que ledit revêtement antireflet disposé au-dessus de la dernière, ou au-dessus de chaque, couche fonctionnelle métallique comporte une couche antireflet d'indice haut en un matériau présentant un indice de réfraction compris entre 2,3 et 2,7, cette couche antireflet d'indice haut étant de préférence à base d'oxyde et/ou cette couche antireflet d'indice haut présentant de préférence une épaisseur physique comprise entre 5 et 25 nm.

Dans une autre version particulière de l'invention, au moins une couche fonctionnelle est déposée directement sur un revêtement de sous-blocage disposé entre la couche fonctionnelle et le revêtement antireflet sous-jacent à la couche fonctionnelle et/ou au moins une couche fonctionnelle est déposée directement sous un revêtement de sur-blocage disposé entre la couche fonctionnelle et le revêtement antireflet sus-jacent à la couche fonctionnelle et le revêtement de sous-blocage et/ou le revêtement de sur-blocage comprend une couche fine à base de nickel ou de titane présentant une épaisseur physique e' telle que 0,2 nm ≤ e' ≤ 2,5 nm.

La dernière couche du revêtement antireflet sus-jacent, celle la plus éloignée du substrat, peut être à base d'oxyde, et est de préférence alors déposée sous stœchiométrique ; elle peut être notamment à base de dioxyde de titane (en TiOₓ) ou à base d'oxyde mixte de zinc et d'étain (en Sn_{z}Zn_{y}Oₓ).

L'empilement peut ainsi comporter une dernière couche (« overcoat » en anglais), c'est-à-dire une couche de protection, déposée de préférence sous stœchiométrique. Cette couche se retrouve oxydée pour l'essentiel stœchiométriquement dans l'empilement après le dépôt.

L'invention concerne en outre un vitrage multiple comportant au moins deux substrats qui sont maintenus ensemble par une structure de châssis, ledit vitrage réalisant une séparation entre un espace extérieur et un espace intérieur, dans lequel au moins une lame de gaz intercalaire est disposée entre les deux substrats, un substrat étant selon l'invention.

Dans une variante particulière, l'empilement selon l'invention est positionné en face 4 du vitrage.

Le vitrage selon l'invention incorpore au moins le substrat porteur de l'empilement selon l'invention, éventuellement associé à au moins un autre substrat. Chaque substrat peut être clair ou coloré. Un des substrats au moins notamment peut être en verre coloré dans la masse. Le choix du type de coloration va dépendre du niveau de transmission lumineuse recherché et/ou de l'aspect colorimétrique recherché pour le vitrage une fois sa fabrication achevée.

Le vitrage selon l'invention peut présenter une structure feuilletée, associant notamment au moins deux substrats rigides du type verre par au moins une feuille de polymère thermoplastique, afin de présenter une structure de type verre/empilement de couches minces/feuille(s)/verre / feuille de verre. Le polymère peut notamment être à base de polyvinylbutyral PVB, éthylène vinylacétate EVA, polyéthylène téréphtalate PET, polychlorure de vinyle PVC.

L'invention concerne en outre l'utilisation d'au moins une couche fonctionnelle métallique à base d'argent ou en argent et deux revêtements antireflet pour réaliser un substrat revêtu d'un empilement de couches minces et notamment un substrat selon l'invention, ladite (c'est-à-dire la seule couche fonctionnelle métallique de l'empilement lorsque l'empilement comporte une seule couche fonctionnelle métallique à base d'argent ou en argent), ou chaque (c'est-à-dire toutes les couches fonctionnelles métalliques de l'empilement lorsque l'empilement comporte plusieurs couches fonctionnelles métalliques à base d'argent ou en argent) couche fonctionnelle métallique étant une couche discontinue présentant un taux d'occupation surfacique compris entre 50 % et 98 %, voire entre 53 % et 83 %, voire entre 63 % et 83 %.

L'invention concerne en outre un procédé de dépôt d'au moins une couche fonctionnelle métallique à base d'argent ou en argent et deux revêtements antireflet pour réaliser un substrat revêtu d'un empilement de couches minces et notamment un substrat selon l'invention, ladite (c'est-à-dire la seule couche fonctionnelle métallique de l'empilement lorsque l'empilement comporte une seule couche fonctionnelle métallique à base d'argent ou en argent), ou chaque (c'est-à-dire toutes les couches fonctionnelles métalliques de l'empilement lorsque l'empilement comporte plusieurs couches fonctionnelles métalliques à base d'argent ou en argent) couche fonctionnelle métallique étant une couche discontinue présentant un taux d'occupation surfacique compris entre 50 % et 98 %, voire entre 53 % et 83 %, voire entre 63 % et 83 %.

Avantageusement, la présente invention permet ainsi de réaliser un empilement de couches minces monocouche fonctionnelle présentant, déposé sur un substrat transparent, une transmission lumineuse dans le visible T_{L} > 50 % et une réflexion lumineuse dans le visible R_{L} (côté empilement) inférieure à 20 % avec des couleurs relativement neutres en transmission et en réflexion, tout en présentant une émissivité inférieure à celle du substrat seul.

Avantageusement, la présente invention permet ainsi de réaliser un empilement de couches minces à 1, 2, 3, 4, voire plus encore, couche(s) fonctionnelle(s) métallique(s) dans lequel toutes les couches fonctionnelles métalliques à base d'argent ou en argent de l'empilement sont discontinues afin que l'empilement présente une résistance mécanique élevée et/ou une résistance chimique élevée.

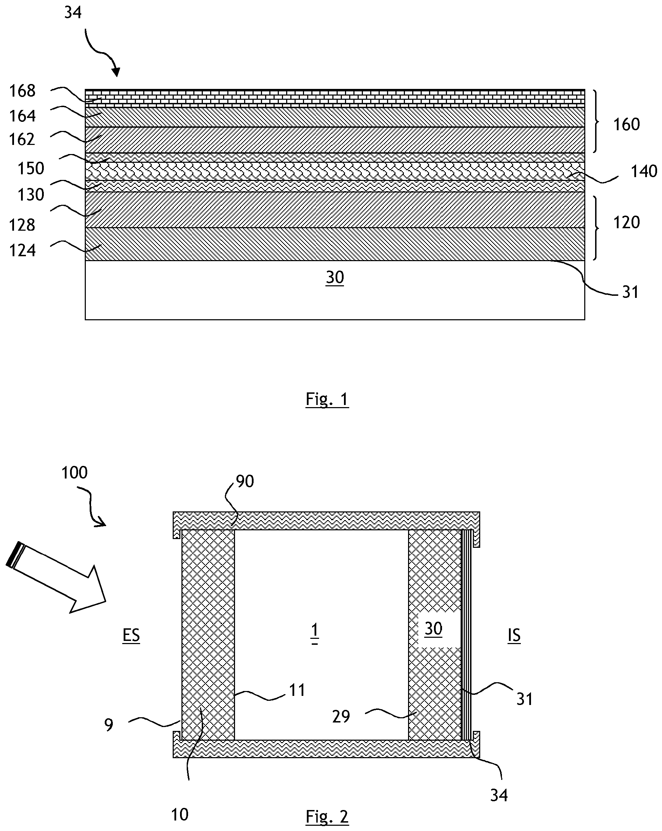

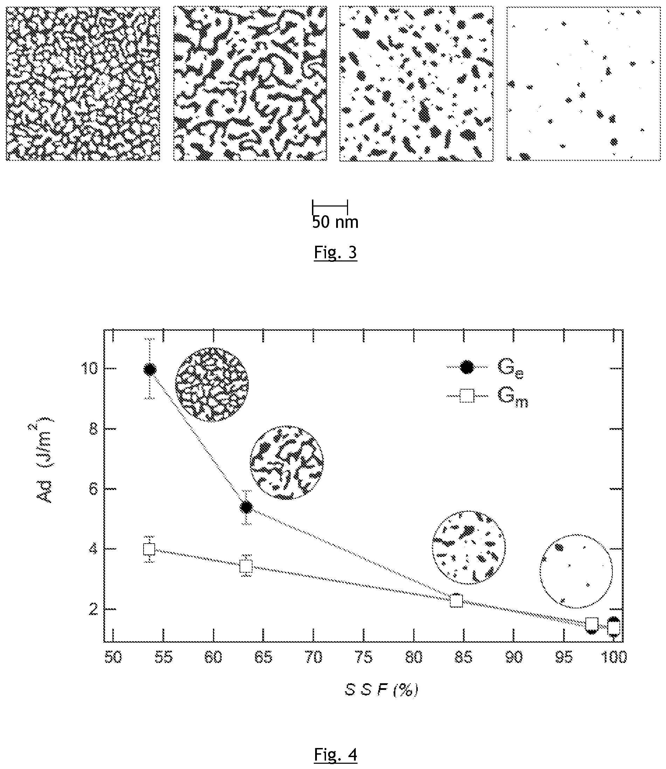

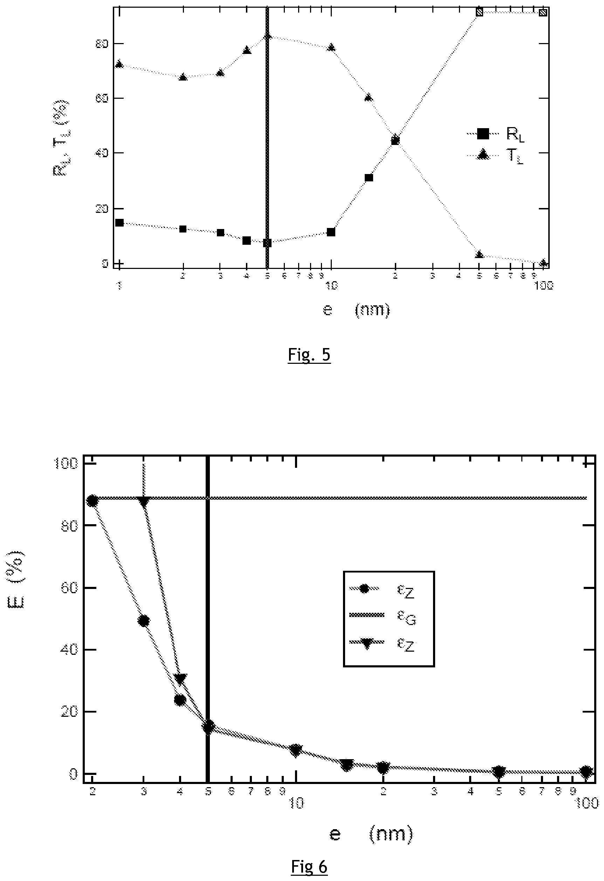

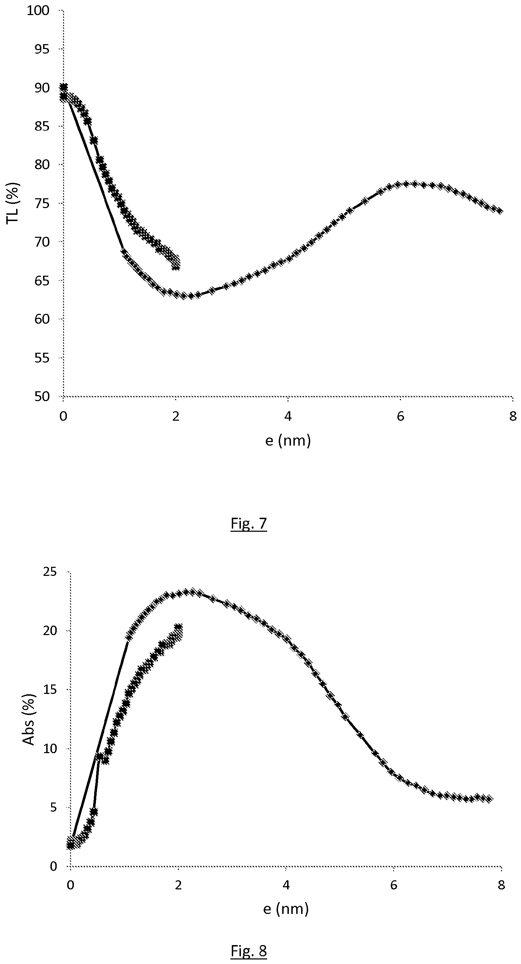

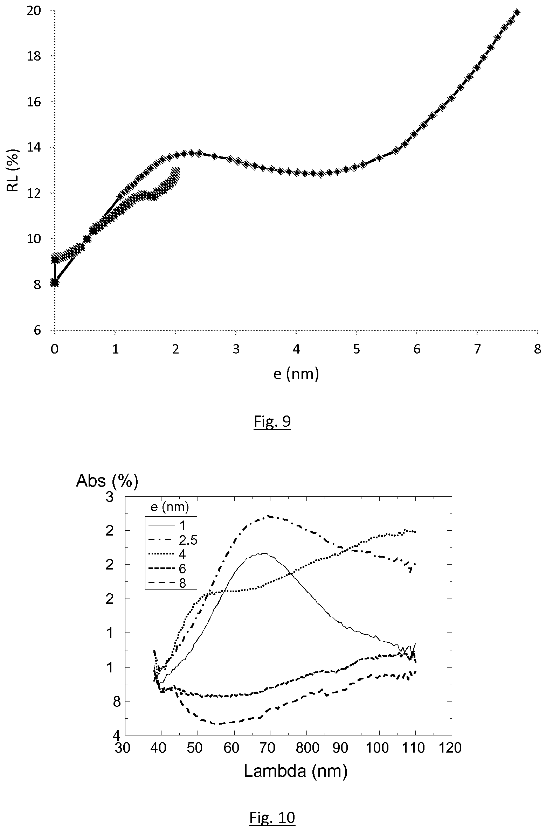

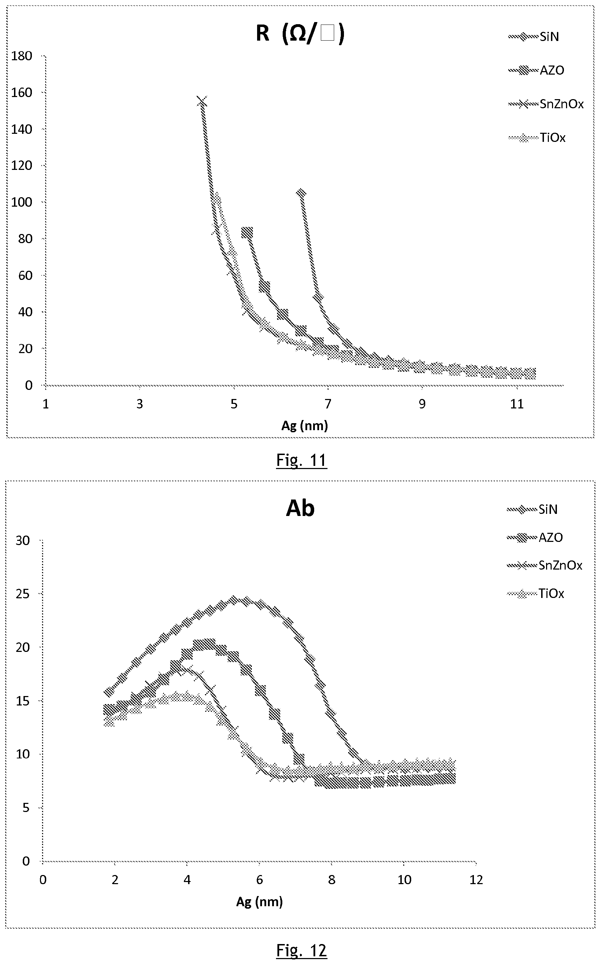

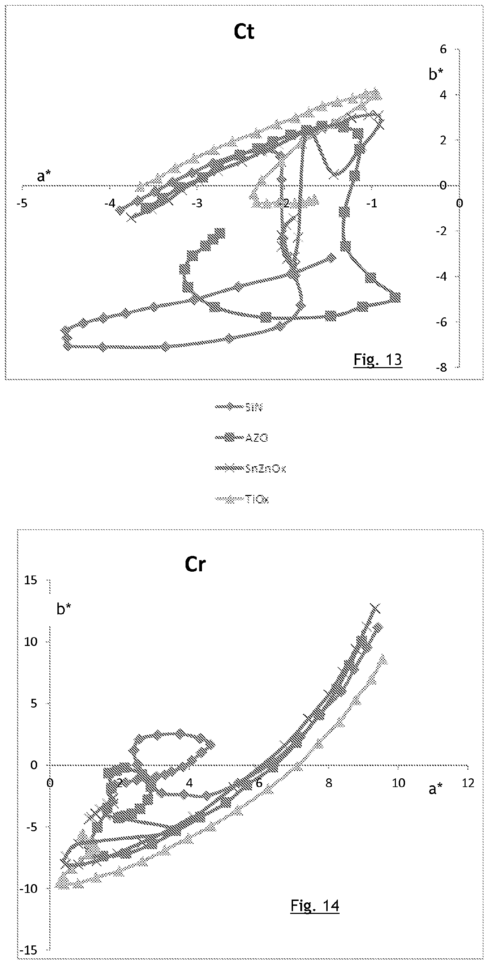

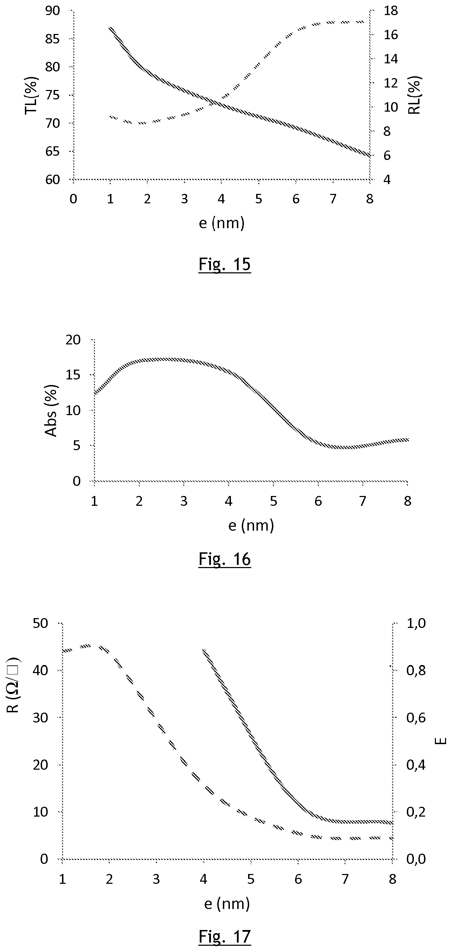

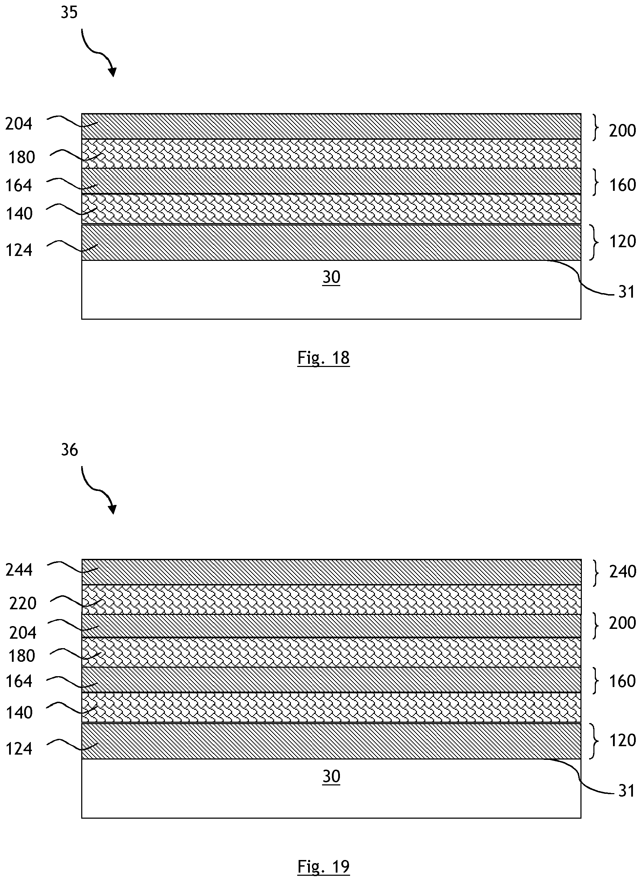

Les détails et caractéristiques avantageuses de l'invention ressortent des exemples non limitatifs suivants, illustrés à l'aide des figures ci-jointes illustrant :
- en figure 1, un empilement monocouche fonctionnelle selon l'invention, la couche fonctionnelle discontinue étant déposée directement sur un revêtement de sous-blocage et directement sous un revêtement de sur-blocage ;
- en figure 2, une solution de double vitrage incorporant un empilement monocouche fonctionnelle selon la figure 1 ;
- en figure 3, les images en MET binaire, de gauche à droite, pour une couche fonctionnelle en argent présentant un taux d'occupation surfacique de 53 % à 98 % ;
- en figure 4, l'énergie d'adhésion Ad, en J/m², mesurée pour les quatre cas de couche discontinue de la figure 3 et comparée à la valeur théorique, Gm, selon les modèles, pour ces mêmes quatre cas, en fonction de la fraction de surface d'argent (« Silver Surface Fraction », SFF, en anglais) c'est-à-dire le taux d'occupation surfacique ;
- en figure 5, la transmission lumineuse dans le visible T_{L}, en triangles noirs, et la réflexion lumineuse dans le visible R_{L}, en rectangles noirs, d'un empilement de couches minces de type Z en fonction de l'épaisseur e de la couche d'argent ;
- en figure 6, l'émissivité théorique en triangles noirs inversé et l'émissivité mesurée, en ronds noirs, d'un empilement de couches minces de type Z en fonction de l'épaisseur e de la couche d'argent ainsi que du substrat seul, sans empilement ;
- en figure 7, la transmission lumineuse dans le visible T_{L}, en losanges noirs d'un empilement de couches minces de type Y en fonction de l'épaisseur e de la couche d'argent pour un gradient allant de 1,0 à 8,0 nm et en carrés noirs pour d'un empilement de couches minces de type Y en fonction de l'épaisseur e de la couche d'argent pour un gradient allant de 0,0 à 2,0 nm ;
- en figure 8, l'absorption lumineuse dans l'infrarouge Abs, en losanges noirs d'un empilement de couches minces de type Y en fonction de l'épaisseur e de la couche d'argent pour un gradient allant de 1,0 à 8,0 nm et en carrés noirs pour d'un empilement de couches minces de type Y en fonction de l'épaisseur e de la couche d'argent pour un gradient allant de 0,0 à 2,0 nm ;
- en figure 9, la réflexion lumineuse dans le visible R_{L}, en losanges noirs d'un empilement de couches minces de type Y en fonction de l'épaisseur e de la couche d'argent pour un gradient allant de 1,0 à 8,0 nm et en carrés noirs pour d'un empilement de couches minces de type Y en fonction de l'épaisseur e de la couche d'argent pour un gradient allant de 0,0 à 2,0 nm ;
- en figure 10, le spectre d'absorption d'un empilement de couches minces de type Y en fonction de la longueur d'onde Lambda et en fonction de l'épaisseur e de la couche d'argent ;
- en figure 11, la résistance par carré R en ohms par carré des empilements des exemples 1 à 4 en fonction de l'épaisseur de la couche d'argent ;
- en figure 12, l'absorption infrarouge Ab des empilements des exemples 1 à 4 en fonction de l'épaisseur de la couche d'argent ;
- en figure 13, la couleur en transmission ct dans le diagramme Lab, des empilements des exemples 1 à 4, en fonction de l'épaisseur de la couche d'argent ; et
- en figure 14, la couleur en réflexion Cr dans le diagramme Lab, côté empilement, des empilements des exemples 1 à 4, en fonction de l'épaisseur de la couche d'argent
- en figure 15, la transmission lumineuse dans le visible T_{L}, en tirets, et la réflexion lumineuse dans le visible R_{L}, en trait plein, de l'exemple 6, en fonction de l'épaisseur e de la couche d'argent ;
- en figure 16, l'absorption dans l'infrarouge de l'exemple 6, en fonction de l'épaisseur e de la couche d'argent ;
- en figure 17, l'émissivité, en tirets, et la résistance par carré, en trait plein, de l'exemple 6, en fonction de l'épaisseur e de la couche d'argent ;
- en figure 18, un empilement bicouche fonctionnelle selon l'invention, chacune des deux couches fonctionnelles discontinues étant déposée directement sur un revêtement antireflet et directement sous un revêtement antireflet ; et
- en figure 19, un empilement tri-couches fonctionnelles selon l'invention, chacune des trois couches fonctionnelles discontinues étant déposée directement sur un revêtement antireflet et directement sous un revêtement antireflet.

Dans les figures 1, 2, 18 et 19, les proportions entre les épaisseurs des différentes couches ou des différents éléments ne sont pas rigoureusement respectées afin de faciliter leur lecture.

La figure 1 illustre une structure d'un empilement 34 monocouche fonctionnelle selon l'invention déposé sur un substrat 30 verrier, transparent, et plus précisément sur une face 31 de ce substrat 30, dans laquelle la couche fonctionnelle 140 unique, à base d'argent ou d'alliage métallique contenant de l'argent et de préférence uniquement en argent, est disposée entre deux revêtements antireflet, le revêtement antireflet sous-jacent 120 situé en dessous de la couche fonctionnelle 140 en direction du substrat 30 et le revêtement antireflet sus-jacent 160 disposé au-dessus de la couche fonctionnelle 140 à l'opposé du substrat 30.

Ces deux revêtements antireflet 120, 160, comportent chacun au moins une couche antireflet 124, 164.

Eventuellement, d'une part la couche fonctionnelle 140 peut être déposée directement sur un revêtement de sous-blocage 130 disposé entre le revêtement antireflet sous-jacent 120 et la couche fonctionnelle 140 et d'autre part la couche fonctionnelle 140 peut être déposée directement sous un revêtement de sur-blocage 150 disposé entre la couche fonctionnelle 140 et le revêtement antireflet sus-jacent 160.

Les couches de sous et/ou sur-blocage, bien que déposées sous forme métalliques et présentées comme étant des couches métalliques, sont dans la pratique des couches oxydées car leur fonction première est de s'oxyder au cours du dépôt de l'empilement afin de protéger la couche fonctionnelle.

Ce revêtement antireflet 160 peut se terminer par une couche de protection optionnelle 168, en particulier à base d'oxyde, notamment sous stœchiométrique en oxygène.

Lorsqu'un empilement monocouche fonctionnelle est utilisé dans un vitrage multiple 100 de structure double vitrage, comme illustré en figure 2, ce vitrage comporte deux substrats 10, 30 qui sont maintenus ensemble par une structure de châssis 90 et qui sont séparés l'un de l'autre par une lame de gaz intercalaire 15.

Le vitrage réalise ainsi une séparation entre un espace extérieur ES et un espace intérieur IS.

L'empilement selon l'invention, du fait de sa résistance mécanique élevée, peut être positionné en face 4 (sur la feuille la plus à l'intérieur du bâtiment en considérant le sens incident de la lumière solaire entrant dans le bâtiment et sur sa face tournée vers l'intérieur).

La figure 2 illustre ce positionnement (le sens incident de la lumière solaire entrant dans le bâtiment étant illustré par la double flèche) en face 4 d'un empilement 34 de couches minces positionné sur une face extérieure 31 du substrat 30 en contact avec l'espace extérieur ES, l'autre face 29 du substrat 30 étant en contact avec la lame de gaz intercalaire 15.

Toutefois, il peut aussi être envisagé que dans cette structure de double vitrage, l'un des substrats présente une structure feuilletée ; toutefois, il n'y a pas de confusion possible car dans une telle structure, il n'y a pas de lame de gaz intercalaire.

Dans un premier temps, les travaux réalisés ont porté sur un empilement de type Z, présentant la structure : Substrat / ZnO / Ag / ZnO avec chaque couche de ZnO présentant une épaisseur de 10 nm, puis sur un empilement de type Y, présentant la structure : Substrat / ZnO / Ag / ZnO avec chaque couche de ZnO présentant une épaisseur de 5 nm, puis cinq séries d'exemples ont été réalisés pour tester différents matériaux d'encadrement d'une couche discontinue et enfin, un exemple d'empilement complet a été réalisé.

Pour tous les empilements ci-après, les conditions de dépôt des couches sont :

| Couche | Cible employée | Pression de dépôt | Gaz |
|---|---|---|---|
| Si₃N₄:Al | Si:Al à 92:8 % wt | 1,5.10⁻³ mbar | Ar /(Ar + N₂) à 45 % |
| TiOx | TiO₂ | 1,5.10⁻³ mbar | Ar /(Ar + O₂) à 90 % |
| TiO₂ | TiO₂ | 1,5.10⁻³ mbar | Ar /(Ar + O₂) à 45 % |
| SnZnOₓ | SnZn à 60:40 % wt | 1,5.10⁻³ mbar | Ar /(Ar + O₂) à 43 % |
| ZnO | ZnO | 1,5.10⁻³ mbar | Ar /(Ar + O₂) à 83 % |
| NiCr | NiCr à 80:20 % wt | 2.10⁻³ mbar | Ar à 100 % |
| Ag | Ag | 8.10⁻³ mbar | Ar à 100 % |

Les couches déposées peuvent ainsi être classées en trois catégories :
i- couches en matériau diélectrique/antireflet, présentant un rapport n/k sur toute la plage de longueur d'onde du visible supérieur en 5 : Si₃N₄:Al, TiOₓ, TiO₂, ZnO, SnZnOₓ
ii- couches fonctionnelles métalliques en matériau à propriétés de réflexion dans l'infrarouge et/ou dans le rayonnement solaire : Ag
iii- couches de sur-blocage et sous-blocage destinées à protéger la couche fonctionnelle contre une modification de sa nature lors du dépôt de l'empilement : Ni, NiCr ; leur influence sur les propriétés optiques et énergétiques est en général ignoré lorsqu'elles présentent une épaisseur faible (égale ou inférieure à 2 nm).

Dans tous les exemples l'empilement de couches minces a été déposé sur un substrat en verre sodo-calcique clair d'une épaisseur de 4 mm de la marque Planilux, distribué par la société SAINT-GOBAIN.

Pour ces empilements,
- R indique : la résistance par carré de l'empilement, en ohms par carré ;
- Ab indique l'absorption dans le domaine des infrarouges ;
- T_{L} indique : la transmission lumineuse dans le visible en %, mesurée selon l'illuminant D65 à 2° ;
- R_{L} indique : la réflexion lumineuse côté verre (surface du substrat opposée à celle sur laquelle est déposée l'empilement) dans le visible en %, mesurée selon l'illuminant D65 à 2° ;
- Ct indique la couleur en transmission a* et b* dans le système LAB mesurées selon l'illuminant D65 à 2° ;
- Cr indique la couleur en réflexion a* et b* dans le système LAB mesurées selon l'illuminant D65 à 2°, côté du substrat revêtu (face 31).

Selon l'invention, une couche fonctionnelle métallique 140 est une couche discontinue qui présente un taux d'occupation surfacique (proportion de la surface de la couche qui est située juste sous la couche fonctionnelle et qui est couverte par la couche fonctionnelle métallique) compris entre 50 % et 98 %.

La figure 3 montre, de gauche à droite :
- un taux d'occupation surfacique de 53 % obtenu avec une épaisseur d'argent de 2 nm,
- un taux d'occupation surfacique de 63 % obtenu avec une épaisseur d'argent de 3 nm,
- un taux d'occupation surfacique de 84 % obtenu avec une épaisseur d'argent de 4 nm,
- un taux d'occupation surfacique de 98 % obtenu avec une épaisseur d'argent de 5 nm,
obtenus pour un empilement Z de couches minces présentant la structure : Substrat / ZnO / Ag / ZnO, chaque couche de ZnO présentant une épaisseur de 10 nm.

Dans le présent document, lorsqu'il est fait référence à l'épaisseur e d'une couche fonctionnelle discontinue, il ne s'agit pas de l'épaisseur mesurée dans les zones couvertes par la couche fonctionnelle ou d'une épaisseur moyenne, mais de l'épaisseur qui serait obtenue si la couche fonctionnelle était continue.

Cette valeur est accessible en considérant la vitesse de dépôt de la couche (ou plus précisément la vitesse de défilement du substrat dans l'enceinte de dépôt de la couche fonctionnelle métallique), la quantité de matière pulvérisée par unité de temps, ainsi que la surface sur laquelle est opérée le dépôt. Cette épaisseur est très pratique car elle permet une comparaison directe avec les couches fonctionnelles continues.

L'épaisseur e est ainsi l'épaisseur qui serait mesurée si la couche déposée était continue.

En pratique, si habituellement, dans les mêmes conditions de dépôt par pulvérisation magnétron (très faible pression, composition de la cible, vitesse de défilement du substrat, puissance électrique à la cathode) l'épaisseur de la couche fonctionnelle est de 10 nm, il faut et il suffit, de diminuer la vitesse de défilement du substrat de moitié pour obtenir une épaisseur de couche fonctionnelle qui est de la moitié, c'est-à-dire de 5 nm.

Sur cette figure 3, il s'agit de ce qui a été observé par microscopie électronique à transmission, MET, illustré en mode binaire (noir - blanc). Sur les quatre morceaux de cette figure, l'argent est en blanc et le ZnO en noir.

Il a été constaté que pour un empilement Z de ce type, l'énergie d'adhésion est à peu près constante pour une épaisseur d'argent supérieure à 5 nm : cette énergie est comprise entre 1,0 et 1,5 J/m², ce qui est assez faible.

La figure 4 montre l'énergie d'adhésion qui a été mesurée, Gₑ (courbe avec les points noirs), pour l'empilement Z, dans les quatre cas ci-dessus de couche fonctionnelle métallique 140 discontinue : cette énergie d'adhésion est toujours supérieure à l'énergie d'adhésion constatée pour une épaisseur d'argent supérieure à 5 nm.

En outre, cette énergie de liaison mesurée Gₑ est supérieure à l'énergie de liaison théorique Gₘ (courbe avec les carrés blancs), telle que calculée par les modèles à disposition dans la littérature scientifique.

La figure 5 montre, par les triangles noirs, la transmission lumineuse T_{L}, de l'empilement de type Z, en fonction de l'épaisseur e de la couche fonctionnelle métallique en argent : cette transmission lumineuse reste dans une plage intéressante de 60 à 80 % pour une épaisseur d'argent égale ou inférieure à 5 nm, c'est-à-dire pour un taux d'occupation surfacique compris entre 50 % et 98 %.

La figure 5 montre par ailleurs, par les rectangles noirs, la réflexion lumineuse R_{L}, de l'empilement de type Z, en fonction de l'épaisseur e de la couche fonctionnelle métallique en argent : cette réflexion lumineuse reste dans une plage intéressante de 10 à 20 % pour une épaisseur d'argent égale ou inférieure à 5 nm, c'est-à-dire pour un taux d'occupation surfacique compris entre 50 % et 98 %.

La figure 6 montre à titre indicatif l'émissivité d'un substrat seul, ε_{G}, sans revêtement : c'est la ligne horizontale située à environ 90 %.

La figure 6 montre par ailleurs qu'il est possible de mesurer avec l'empilement de type Z une émissivité ε_{Z} (ronds noirs), qui est inférieure à celle du substrat seul pour une épaisseur d'argent égale ou inférieure à 5 nm, c'est-à-dire pour un taux d'occupation surfacique compris entre 50 % et 98 %.

Le tableau 1 ci-après résume les émissivités mesurées pour les empilements de type Z en fonction de l'épaisseur de la couche d'argent et du taux d'occupation surfacique :

**Tableau 1**

| Couche d'argent | Emissivité ε (%) | Taux d'occupation surfacique (%) |
|---|---|---|
| 2 nm | 88,7 | 53 |
| 3 nm | 49,3 | 63 |
| 4 nm | 23,9 | 84 |
| 5 nm | 15,7 | 98 |

Les calculs théoriques montrent qu'il est possible d'obtenir avec l'empilement de type Z une émissivité ε_{Z} (triangles noirs inversés), qui est inférieure à celle du substrat seul pour une épaisseur d'argent égale ou inférieure à 5 nm, c'est-à-dire pour un taux d'occupation surfacique compris entre 50 % et 98 %, tout en étant supérieure à celle constatée.

Ainsi, les figures 5 et 6 montrent qu'il est possible de réaliser un empilement de type Z présentant une réflexion lumineuse relativement faible, une transmission lumineuse relativement élevée et une émissivité un peu élevée, mais qui peut être utile pour certaines applications, alors même que l'énergie d'adhésion est très élevée, comme visible en figure 4.

Pour tenter de mieux comprendre les phénomènes observés sur les empilements de type Z, un second empilement, appelé « de type Y » a été testé, présentant la structure : Substrat / ZnO / Ag / ZnO avec chaque couche de ZnO présentant une épaisseur de 5 nm et pour cet empilement de type Y, des gradients d'argent d'une part entre 1,0 et 8,0 nm et d'autre part entre 0 et 2,0 nm ont été testés.

Il a été observé que l'absorption augmente de manière continue entre 0 et 2,0 nm pour passer de 2% (absorption du verre nu) à une absorption comprise entre 20 et 23%. Comme précédemment, l'absorption diminue ensuite fortement entre 2 et 6 nm d'argent pour atteindre les valeurs de 5-6%. Il est également intéressant de noter qu'une part du niveau d'absorption est liée à un niveau de réflectivité croissant pour les faibles épaisseurs d'Ag. Ceci implique qu'il serait possible de moduler légèrement le niveau d'absorption en ajustant les effets d'interférence optique.

Par ailleurs, il a été observé qu'entre 0 et environ 2 nm la teinte de l'empilement de type Y devient de plus en plus bleu avec (en référence au système Lab) une très forte décroissance du b*. Entre environ 2 et environ 4 nm l'évolution se modifie drastiquement pour aller dans les rouges avec une forte augmentation du a* et du b*. Enfin entre environ 4 et environ 8 nm les couleurs se réorientent vers des bleus/neutres. Une interprétation de ces évolutions peut être donnée en regardant l'évolution du spectre d'absorption en fonction de l'épaisseur d'argent, en figure 10 :
- aux très faibles épaisseurs d'argent (1,0 et 2,5 nm) le spectre d'absorption présente un pic dont la position le décale vers les rouges en augmentant l'épaisseur d'Ag, passant de 675 nm pour 1 nm à 695 pour 2,5 nm ; Ce pic correspond certainement aux plasmons de surface des « nanoobjets » d'Ag ;
- de 2,5 nm à 4,0 nm, la position du pic d'absorption se décale vers les bleus passant de 695 nm à 535 nm et perd fortement en intensité ; Parallèlement, le niveau d'absorption dans le rouge/proche-IR reste élevé ; Cette gamme d'épaisseur correspond à une couche d'argent discontinue présentant un taux d'occupation surfacique compris entre 50 % et 83 % ;
- enfin de 6,0 à 8,0 nm, le niveau d'absorption diminue fortement au profit d'une réflexion plus élevée : il s'agit de la gamme d'épaisseur pour laquelle la couche d'argent est continue.

La résistance par carré des empilements de type Y a été mesurée localement. Pour ce type d'empilement il a été possible de mesurer des résistances par carré à partir de 3,0 nm, indiquant le début de percolation du film d'Ag.

Cinq séries d'exemples ont été réalisées, numérotés 1 à 5, pour tester différentes épaisseurs de couche fonctionnelle en fonction de la nature de la couche choisie directement dessous en direction du substrat (appelée « couche de mouillage » 128) et différents paramètres ont été mesurés pour chaque série d'exemple.

Pour ces exemples, les deux revêtements antireflet120, 160 comportent chacun une couche antireflet 124, 164.

Le tableau 2 ci-après illustre les épaisseurs géométriques ou physiques (et non pas les épaisseurs optiques) en nanomètres de chacune des couches des exemples 1 à 5 dont certains selon l'invention et d'autres hors invention :

**Tableau 2**

| Couche | Ex. 1 | Ex. 2 | Ex. 3 | Ex. 4 | Ex. 5 |
|---|---|---|---|---|---|
| 164 | ZnO 20 nm | ZnO 20 nm | ZnO 20 nm | ZnO 20 nm | ZnO 20 nm |
| 140 | Ag 1-12 nm | Ag 1-12 nm | Ag 1-12 nm | Ag 1-12 nm | Ag 1-12 nm |
| 128 | TiOₓ 5 nm | SnZnOₓ 5 nm | ZnO 5 nm | Si₃N₄:Al 5 nm | NiCr 2 nm |
| 124 | Si₃N₄:Al 20 nm | Si₃N₄:Al 20 nm | Si₃N₄:Al 20 nm | Si₃N₄:Al 20 nm | Si₃N₄:Al 20 nm |

La couche antireflet 124 de tous les exemples et la couche de mouillage 128 de l'exemple 4 sont à base de nitrure de silicium et plus précisément sont en Si₃N₄:Al (appelé « SiN » dans les figures 11 à 14) ; elles sont déposées à partir d'une cible métallique en silicium dopée à 8 % en masse d'aluminium.

La couche antireflet 164 de tous les exemples et la couche de mouillage 128 de l'exemple 3 sont à base d'oxyde de zinc et plus précisément sont en ZnO (appelé « AZO » dans les figures 11 à 14) ; elles sont déposées à partir d'une cible céramique constituée d'oxyde de zinc ZnO ; toutefois, il est possible d'utiliser par exemple une cible métallique pour réaliser une pulvérisation réactive en présence d'oxygène.

Le tableau 3 ci-après résume les épaisseurs maximales pour la couche fonctionnelle en argent de certains exemples selon l'invention et d'autres hors invention, qui ont permis de réaliser une couche fonctionnelle discontinue, en fonction de la nature de la couche située juste dessous :

**Tableau 3**

| Couche 128 | Epaisseur e pour la couche 140 | Epaisseur e préférée pour la couche 140 | Epaisseur e plus préférée pour la couche 140 |
|---|---|---|---|
| Ex. 1 : TiOx | 1,8 ≤ e ≤ 5,0 nm | 1,8 ≤ e < 5,0 nm | 1,8 ≤ e ≤ 4,5 nm |
| Ex. 2 : SnZnOₓ | 1,8 ≤ e ≤ 4,5 nm | 1,8 ≤ e < 4,5 nm | 1,8 ≤ e ≤ 4,0 nm |
| Ex. 3 : ZnO | 1,8 ≤ e ≤ 5,0 nm | 1,8 ≤ e < 5,0 nm | 1,8 ≤ e ≤ 4,5 nm |
| Ex. 4 : Si₃N₄:Al | 1,8 ≤ e ≤ 7,0 nm | 1,8 ≤ e < 7,0 nm | 1,8 ≤ e ≤ 5,0 nm |
| Ex. 5 : NiCr | 1,8 ≤ e ≤ 5,0 nm | 1,8 ≤ e < 5,0 nm | 1,8 ≤ e ≤ 4,0 nm |

Il a été constaté que des transmissions lumineuses T_{L} assez élevées (supérieures à 50 %) et des réflexions lumineuses R_{L} assez faibles (égales ou inférieures à 20 %) pouvaient être obtenues :

**Tableau 4**

| Couche 128 | Epaisseur e pour la couche 140 | Epaisseur e préférée pour la couche 140 | Epaisseur e plus préférée pour la couche 140 |
|---|---|---|---|
| Ex. 1 : TiOx | 68,4 ≤ T_{L} ≤ 73,1 13,7 ≤ R_{L} ≤ 18,4 | 68,4 ≤ T_{L} ≤ 71,2 14,3 ≤ R_{L} ≤ 18,4 | 68,4 ≤ T_{L} ≤ 69 15,5 ≤ R_{L} ≤ 18,4 |
| Ex. 2 : SnZnOₓ | 66,2 ≤ T_{L} ≤ 69,9 14,1 ≤ R_{L} ≤ 17,6 | 66,2 ≤ T_{L} ≤ 68,7 15,0 ≤ R_{L} ≤17,6 | 66,2 ≤ T_{L} ≤ 68,7 15,6 ≤ R_{L} ≤ 17,6 |
| Ex. 3 : ZnO | 64,1 ≤ T_{L} ≤ 68,1 16,2 ≤ R_{L} ≤ 17,7 | 63,1 ≤ T_{L} ≤ 68,1 16,6 ≤ R_{L} ≤ 17,7 | 63,1 ≤ T_{L} ≤ 68,1 16,6 ≤ R_{L} ≤ 17,7 |
| Ex. 4 : Si₃N₄:Al | 59,4 ≤ T_{L} ≤ 64,1 13,6 ≤ R_{L} ≤ 20,0 | 59,4 ≤ T_{L} ≤ 64,1 14,4 ≤ R_{L} ≤ 20,0 | 59,4 ≤ T_{L} ≤ 64,1 15,6 ≤ R_{L} ≤ 20,0 |

Il a été constaté en outre, que :
- la résistance par carré R des empilements pouvait présenter des valeurs raisonnables (inférieures à 200 Ω par carré), comme visible en figure 11,
- l'absorption pouvait être relativement faible (inférieure ou égale à 25 %), comme visible en figure 12,
- la couleur en transmission Ct pouvait être dans le bleu-vert (a* négatif ou faiblement positif), comme visible en figure 13, et
- la couleur en réflexion Cr pouvait être dans le bleu-vert (a* négatif ou faiblement positif), comme visible en figure 14.

Les couleurs, tant en transmission qu'en réflexion n'ont pas été optimisées pour les essais, mais les règles d'optimisation en fonction des épaisseurs des couches antireflet semblent être les mêmes que pour les empilements à couches fonctionnelles métalliques complètes (ou continues).

Pour conforter ces observations, une série d'exemples, dont certains selon l'invention et d'autres hors invention, a été réalisée sur la base de l'exemple 6 présentant la structure et les épaisseurs géométriques ou physiques en nanomètres (et non pas les épaisseurs optiques) suivantes, en référence à la figure 1 :

**Tableau 5**

| Couche | Matériau | Ex. 6 |
|---|---|---|
| 164 | Si₃N₄:Al | 40 |
| 162 | ZnO:Al | 5 |
| 140 | Ag | 1 à 8 |
| 128 | ZnO:Al | 10 |
| 124 | Si₃N₄:Al | 15 |

Cet exemple 6 présente une structure d'empilement bas-émissif trempable type, en se basant sur l'exemple 3 qui comporte une couche de mouillage, sous la couche fonctionnelle, en ZnO et en suivant l'enseignement de la demande de brevet européen N° EP 718 250, c'est-à-dire en prévoyant de chaque côté de l'ensemble ZnO/Ag, une couche barrière en nitrure de silicium.

Le premier test réalisé est le test HH (Haute Humidité). Cela consiste à mettre dans une enceinte climatique les échantillons pendant toute la durée souhaitée (7 jours, 14 jours et 56 jours) et les retirer sans éteindre la chambre pour les observer. Pour les épaisseurs 1, 2, 3, 4 et 5 nm d'Ag, peu de défauts apparaissent et n'évoluent dans le temps. Contrairement à 6, 7 et 8 nm où de la corrosion apparait dès 7 jours de test et ne fait que s'accroitre.

Il a été constaté que plus les épaisseurs d'argent sont faibles et mieux l'empilement résiste au test de résistance mécanique EST, tel que pratiqué habituellement. Pour les épaisseurs d'Ag de 1 et 2 nm, la première rayure se révèle à 7 N, comparé à 8 nm d'Ag, où la révélation se fait dès 0,3 N. Ces résultats sont cohérents avec l'augmentation de l'énergie d'adhésion observée lors des premiers essais.

Après un recuit à 650°C pendant 10 min (pour les tests ESTTT) simulant un traitement thermique de bombage ou de trempe, les observations restent similaires. Pour des épaisseurs d'Ag plus faibles, les rayures apparaissent plus rapidement. Pour les épaisseurs d'Ag de 1 et 2 nm, la première rayure se révèle à 3 N, comparé à 8 nm d'Ag, où la révélation se fait dès 0,1 N.

Pour évaluer les « performances » optiques de la série d'exemples 6, la transmission lumineuse dans le visible et la réflexion lumineuse dans le visible en fonction de l'épaisseur d'argent sont indiquées à la figure 15, l'absorption lumineuse en fonction de l'épaisseur d'argent est indiquée en figure 16 et la résistance par carré en fonction de l'épaisseur d'argent en figure 17.

L'absorption lumineuse croît entre 1 et 3 nm d'argent jusqu'à des valeurs relativement importantes (de l'ordre de 16 à 18 %), puis décroît après 3 nm pour atteindre de valeurs proches des valeurs « usuelles » d'empilements bas-émissifs classiques à couche d'argent continue, d'épaisseur de 6 à 8 nm. La décroissance de l'absorption après 3 nm est concomitante avec l'augmentation de réflexion lumineuse.

Il a été constaté qu'à partir de 3 nm, il est possible de mesurer des résistances par carré inférieures à 100 Ohms/carré. La courbe de résistance par carré en fonction de l'absorption montre une augmentation rapide de l'absorption pour des résistances par carré comprises entre 5 et 40 Ohms/carré. Cette absorption se stabilise ensuite autour de la valeur maximum d'environ 20 %.

Par ailleurs, il a été remarqué qu'aux faibles épaisseurs d'Ag (1 à 4 nm), la couleur en transmission se situe dans le bleu.

Les figures 18 et 19 illustrent respectivement une structure d'un empilement 35 bicouches fonctionnelles selon l'invention et une structure d'un empilement 36 tri-couches fonctionnelles selon l'invention, déposées sur un substrat 30 verrier, transparent, et plus précisément sur une face 31 de ce substrat 30.

Chaque couche fonctionnelle 140 180, 220, à base d'argent ou d'alliage métallique contenant de l'argent et de préférence uniquement en argent, est disposée entre deux revêtements antireflet, un revêtement antireflet sous-jacent 120, 160, 200 situé en dessous de chaque couche fonctionnelle 140, 180, 220 en direction du substrat 30 et un revêtement antireflet sus-jacent 160, 200, 240 disposé au-dessus de chaque couche fonctionnelle 140, 180, 220 à l'opposé du substrat 30.

Chaque revêtement antireflet 120, 160, 200, 240 comportent au moins une couche antireflet 124, 164, 204, 244.

Pour explorer l'application de la découverte relative à la forte énergie d'adhésion des couches fonctionnelles métalliques à base d'argent ou en argent qui sont discontinues, hors invention, trois exemples ont été réalisés, présentant la structure et les épaisseurs géométriques ou physiques en nanomètres (et non pas les épaisseurs optiques) suivantes, en référence aux figures 1, 18 et 19 :

**Tableau 6**

| Couche | Matériau | Ex. 7 | Ex. 8 | Ex. 9 |
|---|---|---|---|---|
| 244 | TiO₂ | | | 28 |
| 220 | Ag | | | 4,5 |
| 204 | TiO₂ | | 20 | 20 |
| 180 | Ag | | 4,5 | 4,5 |
| 164 | TiO₂ | 11 | 56 | 55 |
| 140 | Ag | 4,5 | 4,5 | 4,5 |
| 124 | TiO₂ | 10 | 11,7 | 20 |

Les couches antireflet 124, 164, 204 et 244 en dioxyde de titane TiO₂ déposées présentent un indice optique (à 550 nm) de 2,4.

Ces empilements ont été déposés sur un substrat en verre clair d'une épaisseur de 4 mm.

Il a été constaté que ces exemples 7 à 9 présentent aussi une augmentation de l'énergie d'adhésion par rapport à l'énergie d'adhésion théorique.

Le tableau suivant présente les principales caractéristiques optiques des exemples 7 à 9 et compare ces caractéristiques à celle d'un empilement (ex. 10) de contrôle solaire par absorption, comprenant une couche fonctionnelle unique nitruré, en NbN d'une épaisseur de 1,5 nm, encadrée au-dessous en direction du substrat en verre d'une épaisseur de 4 mm par une couche à base de nitrure de silicium d'une épaisseur de 10 nm et au-dessus, par une couche à base de nitrure de silicium d'une épaisseur de 30 nm.

**Tableau 7**

| | Ex. 7 | Ex. 8 | Ex. 9 | Ex. 10 |
|---|---|---|---|---|
| g | 64 | 54,8 | 49,9 | 69,1 |
| R (ohms/carré) | 40 | 20 | 13,5 | |
| T_{L} | 70 | 61,5 | 55,2 | 66,6 |
| Ct - a* | -3,5 | -4 | -1,6 | -0,7 |
| Ct -b* | 2,7 | 0 | -1,24 | 3 |
| R_{L} | 15 | 14,9 | 11,95 | 19,1 |
| Cr -a* | 2,3 | -0,3 | -12 | -1 |
| Cr -b* | -15 | -15,5 | -20 | -4 |
| s | 1,09 | 1,12 | 1,11 | 0,96 |

Il a ainsi été constaté qu'il est possible de réaliser :
- un empilement monocouche fonctionnelle métallique à couche fonctionnelle discontinue (ex. 7),
- un empilement bicouches fonctionnelles métalliques à deux couches fonctionnelles discontinues (ex. 8),
- un empilement tri-couches fonctionnelles métalliques à trois couches fonctionnelles discontinues (ex. 9),
qui présentent une transmission lumineuse dans le visible moyenne (entre 50 % et 70 %) et qui est dans la même gamme que celle de l'exemple 10, ainsi qu'une sélectivité s moyenne (de l'ordre de 1,1) et qui est dans la même gamme que celle de l'exemple 10.

En outre, les couleurs obtenues, tant en transmission (Ct) qu'en réflexion (Cr), sont dans les gammes recherchées : bleu, bleu-vert.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Substrat (30) revêtu sur une face (31) d'un empilement de couches minces (34, 35, 36) comportant au moins une couche fonctionnelle métallique (140, 180, 220) à base d'argent ou en argent et deux revêtements antireflet (120, 160, 200, 240), lesdits revêtements antireflet comportant chacun au moins une couche antireflet (124, 164, 204, 244), une dite couche fonctionnelle (140) étant disposée entre les deux revêtements antireflet (120, 160), ***caractérisé en ce que*** ladite, ou chaque, couche fonctionnelle métallique (140, 180, 220) est une couche discontinue présentant un taux d'occupation surfacique compris entre 50 % et 98 %, voire entre 53 % et 83 % et **en ce que** ladite, ou chaque, couche fonctionnelle métallique (140, 180, 220) discontinue présente une épaisseur e :
- 1,0 ≤ e ≤ 4,5 nm, voire 1,0 ≤ e ≤ 4,0 nm, déposée sur une couche à base de dioxyde de titane TiO₂, ou
- 1,0 ≤ e ≤ 4,5 nm, voire 1,0 ≤ e ≤ 4,0 nm, déposée sur une couche à base d'oxyde de zinc et d'étain SnZnOₓ, ou
- 1,0 ≤ e ≤ 5,0 nm, voire 1,0 ≤ e ≤ 4,5 nm, déposée sur une couche à base d'oxyde de zinc ZnO, ou
- 1,0 ≤ e ≤ 7,0 nm, voire 1,0 ≤ e ≤ 6,0 nm, déposée sur une couche à base de nitrure de silicium Si₃N₄, ou
- 1,0 ≤ e ≤ 5,0 nm, voire 1,0 ≤ e ≤ 4,0 nm, déposée sur une couche à base de nickel.

2. Substrat (30) selon la revendication 1, ***caractérisé en ce que*** le revêtement antireflet (120) disposé entre la face (31) et une première ou l'unique couche fonctionnelle métallique (140) discontinue comporte une couche antireflet (124) d'indice moyen en un matériau présentant un indice de réfraction compris entre 1,8 et 2,2 à 550 nm, cette couche antireflet (124) d'indice moyen étant de préférence à base d'oxyde et/ou cette couche antireflet (124) d'indice moyen présentant de préférence une épaisseur physique comprise entre 5 et 35 nm.

3. Substrat (30) selon la revendication 1, ***caractérisé en ce que*** le revêtement antireflet (120, 160, 200) disposé sous chaque couche fonctionnelle métallique (140, 180, 220) discontinue comporte une couche antireflet (124, 164, 204) d'indice moyen en un matériau présentant un indice de réfraction compris entre 1,8 et 2,2 à 550 nm, cette couche antireflet (124, 164, 204) d'indice moyen étant de préférence à base d'oxyde et/ou cette couche antireflet (124, 164, 204) d'indice moyen présentant de préférence une épaisseur physique comprise entre 5 et 35 nm.

4. Substrat (30) selon la revendication 1, ***caractérisé en ce que*** ledit revêtement antireflet (120) disposé entre la face (31) et une première ou l'unique couche fonctionnelle métallique (140) discontinue comporte une couche antireflet (124) d'indice haut en un matériau présentant un indice de réfraction compris entre 2,3 et 2,7 à 550 nm, cette couche antireflet (124) d'indice haut étant de préférence à base d'oxyde et/ou cette couche antireflet (124) d'indice haut présentant de préférence une épaisseur physique comprise entre 5 et 25 nm.

5. Substrat (30) selon la revendication 1, ***caractérisé en ce que*** le revêtement antireflet (120, 160, 200) disposé sous chaque couche fonctionnelle métallique (140, 180, 220) discontinue comporte une couche antireflet (124, 164, 204) d'indice haut en un matériau présentant un indice de réfraction compris entre 2,3 et 2,7 à 550 nm, cette couche antireflet (124, 164, 204) d'indice haut étant de préférence à base d'oxyde et/ou cette couche antireflet (124, 164, 204) d'indice haut présentant de préférence une épaisseur physique comprise entre 5 et 25 nm.

6. Substrat (30) selon l'une quelconque des revendications 1 à 5, ***caractérisé en ce que*** le revêtement antireflet (160) disposé au-dessus d'une première ou l'unique couche fonctionnelle métallique (140) discontinue, à l'opposé de la face (31), comporte une couche antireflet (164) d'indice moyen en un matériau présentant un indice de réfraction compris entre 1,8 et 2,2 à 550 nm, cette couche antireflet (164) d'indice moyen étant de préférence à base d'oxyde et/ou cette couche antireflet (164) d'indice moyen présentant de préférence une épaisseur physique comprise entre 5 et 35 nm.

7. Substrat (30) selon l'une quelconque des revendications 1 à 5, ***caractérisé en ce que*** le revêtement antireflet (160, 200, 240) disposé au-dessus de chaque couche fonctionnelle métallique (140, 180, 220) discontinue à l'opposé de la face (31) comporte une couche antireflet (164, 204, 244) d'indice moyen en un matériau présentant un indice de réfraction compris entre 1,8 et 2,2 à 550 nm, cette couche antireflet (164, 204, 244) d'indice moyen étant de préférence à base d'oxyde et/ou cette couche antireflet (164) d'indice moyen présentant de préférence une épaisseur physique comprise entre 5 et 35 nm.

8. Substrat (30) selon l'une quelconque des revendications 1 à 5, ***caractérisé en ce que*** le revêtement antireflet (160) disposé au-dessus d'une première ou l'unique couche fonctionnelle métallique (140) discontinue, à l'opposé de la face (31), comporte une couche antireflet (164) d'indice haut en un matériau présentant un indice de réfraction compris entre 2,3 et 2,7 à 550 nm, cette couche antireflet (164) d'indice haut étant de préférence à base d'oxyde et/ou cette couche antireflet (164) d'indice haut présentant de préférence une épaisseur physique comprise entre 5 et 25 nm.

9. Substrat (30) selon l'une quelconque des revendications 1 à 5, ***caractérisé en ce que*** le revêtement antireflet (160, 200, 240) disposé au-dessus de chaque couche fonctionnelle métallique (140, 180, 220) discontinue à l'opposé de la face (31) comporte une couche antireflet (164, 204, 244) d'indice haut en un matériau présentant un indice de réfraction compris entre 2,3 et 2,7 à 550 nm, cette couche antireflet (164, 204, 244) d'indice haut étant de préférence à base d'oxyde et/ou cette couche antireflet (164, 204, 244) d'indice haut présentant de préférence une épaisseur physique comprise entre 5 et 25 nm.

10. Substrat (30) selon l'une quelconque des revendications 1 à 9, ***caractérisé en ce que*** ledit empilement (35) comporte deux couches fonctionnelles métalliques (140, 180) à base d'argent ou en argent et trois revêtements antireflet (120, 160, 200), chaque couche fonctionnelle métallique étant disposée entre deux revêtements antireflet.

11. Substrat (30) selon l'une quelconque des revendications 1 à 9, ***caractérisé en ce que*** ledit empilement (36) comporte trois couches fonctionnelles métalliques (140, 180, 220) à base d'argent ou en argent et quatre revêtements antireflet (120, 160, 200, 240), chaque couche fonctionnelle métallique étant disposée entre deux revêtements antireflet.

12. Substrat (30) selon l'une quelconque des revendications 1 à 11, ***caractérisé en ce que*** au moins une dite couche fonctionnelle (140, 180, 220) est déposée directement sur un revêtement de sous-blocage (130) disposé entre cette couche fonctionnelle (140, 180, 220) et le revêtement antireflet (120) sous-jacent à cette couche fonctionnelle et/ou au moins une dite couche fonctionnelle (140, 180, 220) est déposée directement sous un revêtement de sur-blocage (150) disposé entre cette couche fonctionnelle (140, 180, 220) et le revêtement antireflet (160) sus-jacent à cette couche fonctionnelle ***et en ce que*** le revêtement de sous-blocage (130) et/ou le revêtement de sur-blocage (150) comprend une couche fine à base de nickel ou de titane présentant une épaisseur physique e' telle que 0,2 nm ≤ e' ≤ 2,5 nm.

13. Substrat (30) selon l'une quelconque des revendications 1 à 12, ***caractérisé en ce que*** la dernière couche (168) de l'empilement (34, 35, 36), celle la plus éloignée du substrat (30), est à base d'oxyde, déposée de préférence sous stœchiométrique, et notamment est à base de dioxyde de titane ou à base d'oxyde mixte de zinc et d'étain.

14. Vitrage multiple (100) comportant au moins deux substrats (10, 30) qui sont maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats, un substrat (30) étant selon l'une quelconque des revendications 1 à 13.

15. Procédé de dépôt d'au moins une couche fonctionnelle métallique (140, 180, 220) à base d'argent ou en argent, et deux revêtements antireflet (120, 160) pour réaliser un substrat (30) revêtu d'un empilement de couches minces (34, 35, 36) selon l'une quelconque des revendications 1 à 13, ladite, ou chaque, couche fonctionnelle métallique (140, 180, 220) étant une couche discontinue présentant un taux d'occupation surfacique compris entre 50 % et 98 %, voire entre 53 % et 83 %.

## Patentansprüche

1. Substrat (30), das auf einer Fläche (31) mit einer Stapelung von Dünnschichten (34, 35, 36) beschichtet ist, die mindestens eine metallische Funktionsschicht (140, 180, 220) auf Silberbasis oder aus Silber und zwei Antireflexbeschichtungen (120, 160, 200, 240) umfasst, wobei die Antireflexbeschichtungen jeweils mindestens eine Antireflexschicht (124, 164, 204, 244) umfassen, wobei eine Funktionsschicht (140) zwischen den zwei Antireflexbeschichtungen (120, 160) angeordnet ist, ***dadurch gekennzeichnet, dass*** die oder jede metallische Funktionsschicht (140, 180, 220) eine diskontinuierliche Schicht mit einem Oberflächenbelegungsgrad zwischen 50 % und 98 % oder sogar zwischen 53 % und 83 % ist ***und dadurch, dass*** die oder jede diskontinuierliche metallische Funktionsschicht (140, 180, 220) eine Dicke e aufweist:
- 1,0 ≤ e ≤ 4,5 nm oder sogar 1,0 ≤ e ≤ 4,0 nm, abgeschieden auf einer Schicht auf Basis von Titandioxid TiO₂, oder
- 1,0 ≤ e ≤ 4,5 nm oder sogar 1,0 ≤ e ≤ 4,0 nm, abgeschieden auf einer Schicht auf Basis von Zink- und Zinnoxid SnZnOₓ, oder
- 1,0 ≤ e ≤ 5,0 nm oder sogar 1,0 ≤ e ≤ 4,5 nm, abgeschieden auf einer Schicht auf Basis von Zinkoxid ZnO, oder
- 1,0 ≤ e ≤ 7,0 nm oder sogar 1,0 ≤ e ≤ 6,0 nm, abgeschieden auf einer Schicht auf Basis von Siliciumnitrid Si₃N₄, oder
- 1,0 ≤ e ≤ 5,0 nm oder sogar 1,0 ≤ e ≤ 4,0 nm, abgeschieden auf einer Schicht auf Basis von Nickel.

2. Substrat (30) nach Anspruch 1, ***dadurch gekennzeichnet, dass*** die Antireflexbeschichtung (120), die zwischen der Fläche (31) und einer ersten oder der einzigen diskontinuierlichen metallischen Funktionsschicht (140) angeordnet ist, eine Antireflexschicht (124) mit mittlerem Index aus einem Material mit einem Brechungsindex zwischen 1,8 und 2,2 bei 550 nm umfasst, wobei diese Antireflexschicht (124) mit mittlerem Index vorzugsweise auf Oxidbasis vorliegt und/oder diese Antireflexschicht (124) mit mittlerem Index vorzugsweise eine physische Dicke zwischen 5 und 35 nm aufweist.

3. Substrat (30) nach Anspruch 1, ***dadurch gekennzeichnet, dass*** die Antireflexbeschichtung (120, 160, 200), die unter jeder diskontinuierlichen metallischen Funktionsschicht (140, 180, 220) angeordnet ist, eine Antireflexschicht (124, 164, 204) mit mittlerem Index aus einem Material mit einem Brechungsindex zwischen 1,8 und 2,2 bei 550 nm umfasst, wobei diese Antireflexschicht (124, 164, 204) mit mittlerem Index vorzugsweise auf Oxidbasis vorliegt und/oder diese Antireflexschicht (124, 164, 204) mit mittlerem Index vorzugsweise eine physische Dicke zwischen 5 und 35 nm aufweist.

4. Substrat (30) nach Anspruch 1, ***dadurch gekennzeichnet, dass*** die Antireflexbeschichtung (120), die zwischen der Fläche (31) und einer ersten oder der einzigen diskontinuierlichen metallischen Funktionsschicht (140) angeordnet ist, eine Antireflexschicht (124) mit hohem Index aus einem Material mit einem Brechungsindex zwischen 2,3 und 2,7 bei 550 nm umfasst, wobei diese Antireflexschicht (124) mit hohem Index vorzugsweise auf Oxidbasis vorliegt und/oder diese Antireflexschicht (124) mit hohem Index vorzugsweise eine physische Dicke zwischen 5 und 25 nm aufweist.

5. Substrat (30) nach Anspruch 1, ***dadurch gekennzeichnet, dass*** die Antireflexbeschichtung (120, 160, 200), die unter jeder diskontinuierlichen metallischen Funktionsschicht (140, 180, 220) angeordnet ist, eine Antireflexschicht (124, 164, 204) mit hohem Index aus einem Material mit einem Brechungsindex zwischen 2,3 und 2,7 bei 550 nm umfasst, wobei diese Antireflexschicht (124, 164, 204) mit hohem Index vorzugsweise auf Oxidbasis vorliegt und/oder diese Antireflexschicht (124, 164, 204) mit hohem Index vorzugsweise eine physische Dicke zwischen 5 und 25 nm aufweist.

6. Substrat (30) nach einem der Ansprüche 1 bis 5, ***dadurch gekennzeichnet, dass*** die Antireflexbeschichtung (160), die über einer ersten oder der einzigen diskontinuierlichen metallischen Funktionsschicht (140) gegenüber der Fläche (31) angeordnet ist, eine Antireflexschicht (164) mit mittlerem Index aus einem Material mit einem Brechungsindex zwischen 1,8 und 2,2 bei 550 nm umfasst, wobei diese Antireflexschicht (164) mit mittlerem Index vorzugsweise auf Oxidbasis vorliegt und/oder diese Antireflexschicht (164) mit mittlerem Index vorzugsweise eine physische Dicke zwischen 5 und 35 nm aufweist.

7. Substrat (30) nach einem der Ansprüche 1 bis 5, ***dadurch gekennzeichnet, dass*** die Antireflexbeschichtung (160, 200, 240), die über jeder diskontinuierlichen metallischen Funktionsschicht (140, 180, 220) gegenüber der Fläche (31) angeordnet ist, eine Antireflexschicht (164, 204, 244) mit mittlerem Index aus einem Material mit einem Brechungsindex zwischen 1,8 und 2,2 bei 550 nm umfasst, wobei diese Antireflexschicht (164, 204, 244) mit mittlerem Index vorzugsweise auf Oxidbasis vorliegt und/oder diese Antireflexschicht (164) mit mittlerem Index vorzugsweise eine physische Dicke zwischen 5 und 35 nm aufweist.

8. Substrat (30) nach einem der Ansprüche 1 bis 5, ***dadurch gekennzeichnet, dass*** die Antireflexbeschichtung (160), die über einer ersten oder der einzigen diskontinuierlichen metallischen Funktionsschicht (140) gegenüber der Fläche (31) angeordnet ist, eine Antireflexschicht (164) mit hohem Index aus einem Material mit einem Brechungsindex zwischen 2,3 und 2,7 bei 550 nm umfasst, wobei diese Antireflexschicht (164) mit hohem Index vorzugsweise auf Oxidbasis vorliegt und/oder diese Antireflexschicht (164) mit hohem Index vorzugsweise eine physische Dicke zwischen 5 und 25 nm aufweist.

9. Substrat (30) nach einem der Ansprüche 1 bis 5, ***dadurch gekennzeichnet, dass*** die Antireflexbeschichtung (160, 200, 240), die über jeder diskontinuierlichen metallischen Funktionsschicht (140, 180, 220) gegenüber der Fläche (31) angeordnet ist, eine Antireflexschicht (164, 204, 244) mit hohem Index aus einem Material mit einem Brechungsindex zwischen 2,3 und 2,7 bei 550 nm umfasst, wobei diese Antireflexschicht (164, 204, 244) mit hohem Index vorzugsweise auf Oxidbasis vorliegt und/oder diese Antireflexschicht (164, 204, 244) mit hohem Index vorzugsweise eine physische Dicke zwischen 5 und 25 nm aufweist.

10. Substrat (30) nach einem der Ansprüche 1 bis 9, ***dadurch gekennzeichnet, dass*** die Stapelung (35) zwei metallische Funktionsschichten (140, 180) auf Silberbasis oder aus Silber und drei Antireflexbeschichtungen (120, 160, 200) umfasst, wobei jede metallische Funktionsschicht zwischen zwei Antireflexbeschichtungen angeordnet ist.

11. Substrat (30) nach einem der Ansprüche 1 bis 9, ***dadurch gekennzeichnet, dass*** die Stapelung (36) drei metallische Funktionsschichten (140, 180, 220) auf Silberbasis oder aus Silber und vier Antireflexbeschichtungen (120, 160, 200, 240) umfasst, wobei jede metallische Funktionsschicht zwischen zwei Antireflexbeschichtungen angeordnet ist.

12. Substrat (30) nach einem der Ansprüche 1 bis 11, ***dadurch gekennzeichnet, dass*** mindestens eine Funktionsschicht (140, 180, 220) direkt auf einer Underblocking-Beschichtung (130) abgeschieden ist, die zwischen dieser Funktionsschicht (140, 180, 220) und der unter dieser Funktionsschicht liegenden Antireflexbeschichtung (120) angeordnet ist, und/oder mindestens eine Funktionsschicht (140, 180, 220) direkt unter einer Overblocking-Beschichtung (150) abgeschieden ist, die zwischen dieser Funktionsschicht (140, 180, 220) und der über dieser Funktionsschicht liegenden Antireflexbeschichtung (160) angeordnet ist, ***und dadurch, dass*** die Underblocking-Beschichtung (130) und/oder die Overblocking-Beschichtung (150) eine dünne Schicht auf Basis von Nickel oder Titan mit einer physischen Dicke e' wie 0,2 nm ≤ e' ≤ 2,5 nm beinhaltet.

13. Substrat (30) nach einem der Ansprüche 1 bis 12, ***dadurch gekennzeichnet, dass*** die letzte Schicht (168) der Stapelung (34, 35, 36), die am weitesten vom Substrat (30) entfernt ist, auf Basis von Oxid, vorzugsweise unterstöchiometrisch abgeschieden, vorliegt und insbesondere auf Basis von Titandioxid oder auf Basis von Mischoxid aus Zink und Zinn vorliegt.

14. Mehrfachverglasung (100), die mindestens zwei Substrate (10, 30) umfasst, die durch eine Rahmenstruktur (90) zusammengehalten werden, wobei die Verglasung eine Trennung zwischen einem Außenraum (ES) und einem Innenraum (IS) herstellt, bei der mindestens ein Gaszwischenspalt (15) zwischen den zwei Substraten angeordnet ist, wobei ein Substrat (30) nach einem der Ansprüche 1 bis 13 vorliegt.

15. Verfahren zum Abscheiden von mindestens einer metallischen Funktionsschicht (140, 180, 220) auf Silberbasis oder aus Silber und von zwei Antireflexbeschichtungen (120, 160), um ein Substrat (30) herzustellen, das mit einer Stapelung von Dünnschichten (34, 35, 36) nach einem der Ansprüche 1 bis 13 beschichtet ist, wobei die oder jede metallische Funktionsschicht (140, 180, 220) eine diskontinuierliche Schicht mit einem Flächenbelegungsgrad zwischen 50 % und 98 % oder sogar zwischen 53 % und 83 % ist.

## Claims

1. A substrate (30) coated on one face (31) with a multilayer of thin films (34, 35, 36) comprising at least one metal functional layer (140, 180, 220) based on silver or made of silver and two antireflective coatings (120, 160, 200, 240), the said antireflective coatings each comprising at least one anti reflective layer (124, 164, 204, 244), a said functional layer (140) being disposed between the two antireflective coatings (120. 160), ***characterized in that*** the said, or each, metal functional layer (140, 180, 220) is a discontinuous layer having a surface area occupation factor in the range between 50% and 98%, or even between 53% and 83% **and** ***in that*** the said, or each, discontinuous metal functional layer (140, 180, 220) has a thickness e:
- 1.0 ≤ e ≤ 4.5 nm, or even 1.0 ≤ e ≤ 4.0 nm, deposited on a layer based on titanium dioxide TiO₂, or
- 1.0 ≤ e ≤ 4.5 nm, or even 1.0 ≤ e ≤ 4.0 nm, deposited on a layer based on zinc and tin oxide SnZnOₓ, or
- 1.0 ≤ e ≤ 5.0 nm, or even 1.0 ≤ e ≤ 4.5 nm, deposited on a layer based on zinc oxide ZnO, or
- 1.0 ≤ e ≤ 7.0 nm, or even 1.0 ≤ e ≤ 6.0 nm, deposited on a layer based on silicon nitride Si₃N₄, or
- 1.0 ≤ e ≤ 5.0 nm, or even 1.0 ≤ e ≤ 4.0 nm, deposited on a layer based on nickel.

2. The substrate (30) as claimed in claim 1, ***characterized in that*** the antireflective coating (120) disposed between the face (31) and a first or the only discontinuous metal functional layer (140) comprises a medium index antireflective layer (124) made of a material having a refractive index in the range between 1.8 and 2.2 at 550 nm, this medium index antireflective layer (124) preferably being based on oxide and/or this medium index antireflective layer (124) preferably having a physical thickness in the range between 5 and 35 nm.

3. The substrate (30) as claimed in claim 1, ***characterized in that*** the antireflective coating (120, 160, 200) disposed under each discontinuous metal functional layer (140, 180, 220) comprises a medium index antireflective layer (124, 164, 204) made of a material having a refractive index in the range between 1.8 and 2.2 at 550 nm, this medium index antireflective layer (124, 164, 204) preferably being based on oxide and/or this medium index antireflective layer (124, 164, 204) preferably having a physical thickness in the range between 5 and 35 nm.

4. The substrate (30) as claimed in claim 1, ***characterized in that*** said antireflective coating (120) disposed between the face (31) and a first or the only discontinuous metal functional layer (140) comprises a high index antireflective layer (124) made of a material having a refractive index in the range between 2.3 and 2.7 at 550 nm, this high index antireflective layer (124) preferably being based on oxide and/or this high index antireflective layer (124) preferably having a physical thickness in the range between 5 and 25 nm.

5. The substrate (30) as claimed in claim 1, ***characterized in that*** the antireflective coating (120, 160, 200) disposed under each discontinuous metal functional layer (140, 180, 220) comprises a high index antireflective layer (124, 164, 204) made of a material having a refractive index in the range between 2.3 and 2.7 at 550 nm, this high index antireflective layer (124, 164, 204) preferably being based on oxide and/or this high index antireflective layer (124, 164, 204) preferably having a physical thickness in the range between 5 and 25 nm.

6. The substrate (30) as claimed in any one of claims 1 to 5, ***characterized in that*** the antireflective coating (160) disposed on top of a first or the only discontinuous metal functional layer (140), on the opposite side from the face (31), comprises a medium index antireflective layer (164) made of a material having a refractive index in the range between 1.8 and 2.2 at 550 nm, this medium index antireflective layer (164) preferably being based on oxide and/or this medium index antireflective layer (164) preferably having a physical thickness in the range between 5 and 35 nm.

7. The substrate (30) as claimed in any one of claims 1 to 5, ***characterized in that*** the antireflective coating (160, 200, 240) disposed on top of each discontinuous metal functional layer (140, 180, 220) on the opposite side from the face (31) comprises a medium index antireflective layer (164, 204, 244) made of a material having a refractive index in the range between 1.8 and 2.2 at 550 nm, this medium index antireflective layer (164, 204, 244) preferably being based on oxide and/or this medium index antireflective layer (164) preferably having a physical thickness in the range between 5 and 35 nm.

8. The substrate (30) as claimed in any one of claims 1 to 5, ***characterized in that*** the antireflective coating (160) disposed on top of a first or the only discontinuous metal functional layer (140), on the opposite side from the face (31), comprises a high index antireflective layer (164) made of a material having a refractive index in the range between 2.3 and 2.7 at 550 nm, this high index antireflective layer (164) preferably being based on oxide and/or this high index antireflective layer (164) preferably having a physical thickness in the range between 5 and 25 nm.

9. The substrate (30) as claimed in any one of claims 1 to 5, ***characterized in that*** the antireflective coating (160, 200, 240) disposed on top of each discontinuous metal functional layer (140, 180, 220) on the opposite side from the face (31) comprises a high index antireflective layer (164, 204, 244) made of a material having a refractive index in the range between 2.3 and 2.7 at 550 nm, this high index antireflective layer (164, 204, 244) preferably being based on oxide and/or this high index antireflective layer (164, 204, 244) preferably having a physical thickness in the range between 5 and 25 nm.

10. The substrate (30) as claimed in any one of claims 1 to 9, ***characterized in that*** said multilayer (35) comprises two metal functional layers (140, 180) based on silver or made of silver and three antireflective coatings (120, 160, 200), each metal functional layer being disposed between two antireflective coatings.

11. The substrate (30) as claimed in any one of claims 1 to 9, ***characterized in that*** said multilayer (36) comprises three metal functional layers (140, 180, 220) based on silver or made of silver and four antireflective coatings (120, 160, 200, 240), each metal functional layer being disposed between two antireflective coatings.

12. The substrate (30) as claimed in any one of claims 1 to 11, ***characterized in that*** at least one said functional layer (140, 180, 220) is deposited directly onto a barrier undercoat (130) disposed between this functional layer (140, 180, 220) and the antireflective coating (120) underlying this functional layer and/or at least one said functional layer (140, 180, 220) is deposited directly under a barrier overcoat (150) disposed between this functional layer (140, 180, 220) and the antireflective coating (160) overlying this functional layer and ***in that*** the barrier undercoat (130) and/or the barrier overcoat (150) comprises a thin layer based on nickel or on titanium having a physical thickness e' such that 0.2 nm ≤ e' ≤ 2.5 nm.

13. The substrate (30) as claimed in any one of claims 1 to 12, ***characterized in that*** the last layer (168) of the multilayer (34, 35, 36), that furthest from the substrate (30), is based on oxide, preferably deposited substœchiometric, and notably is based on titanium dioxide or based on a mixed oxide of zinc and tin.

14. A multiple glazing unit (100) comprising at least two substrates (10. 30) which are held together by a chassis structure (90), said glazing unit forming a separation between an exterior space (ES) and an interior space (IS), in which at least one gas separation interface (15) is disposed between the two substrates, a substrate (30) being as claimed in any one of claims 1 to 13.

15. A process for depositing at least one metal functional layer (140, 180, 220) based on silver or made of silver, and two antireflective coatings (120, 160) in order to form a substrate (30) coated with a multilayer of thin films (34, 35, 36) as claimed in any one of claims 1 to 13, the said, or each, metal functional layer (140, 180, 220) being a discontinuous layer having a surface area occupation factor in the range between 50% and 98%, or even between 53% and 83%.
